# EUROPEAN PATENT SPECIFICATION

(11) **EP 1 173 685 B1**
(45) Date of publication and mention of the grant of the patent: **18.11.2009**
(21) Application number: 00914183.9
(22) Date of filing: 05.04.2000
(51) Int. Cl.: F16C 11/06

(54) **CONNECTING ELEMENT**
VERBINDUNGSELEMENT
ELEMENT DE RACCORDEMENT

(30) Priority: 26.04.1999 DE 19918911
(43) Date of publication of application: 23.01.2002
(73) Proprietor: FICO CABLES, S.A., 08191 Rubi, Barcelona (ES)
(72) Inventor: SANCHEZ, Manuel Martin, E-08191 Rubi (ES); CONTERO, Juan M. Dona, E-08191 Rubi (ES)
(74) Representative: Hess, Peter K. G.
(86) International application number: PCT/EP2000/003027
(87) International publication number: WO 2000/065245

(56) References cited:
- DE-A- 4 428 496
- DE-A- 19 824 530
- DE-U- 29 804 345
- US-A- 5 265 495
- US-A- 5 676 485

## Description

### 1. Technical Field:

The present invention relates to a connecting element for the releasable connection of a first part to a second part, in particular a Bowden cable to a lever.

### 2. The Prior Art:

In many fields of mechanical engineering there is the problem to interconnect two parts. An important case is the connection between a lever and a Bowden cable, for example when the movements of a shift lever are to be transmitted via a Bowden cable to the gear box of a vehicle or when a parking brake is to be operated by means of a braking lever via two braking cables. Thus, such a connection is in particular used in the automotive field, but also in construction machines or sport equipment a plurality of connections between separate components of a machine or the device are needed.

Such a device has to meet different requirements. On the one hand it should be reliable and stable so that the parts do not become unintentionally disconnected during their use (operation of a vehicle, movement of a construction machine, etc.) On the other hand, the connection should for cost reasons be designed such that the parts can during assembly easily and without excessive force be manually assembled. Connections with screws or the like are therefore excluded from the beginning.

In the prior art constructions are well-known, where the maximum mechanical loading on the connection exceeds the necessary force during assembly many times. These arrangements consist typically of a sphere-like head attached to the first part which is snapped into a dome shaped receptacle attached to the second part, whereby the sides of the dome shaped receptacle are bent. In order to provide a lasting latching of this connection, the dome shaped receptacle moves on a slide or the like together with the sphere-like head into an opening or recess of the second part whose walls avoid a bending of the sides of the dome shaped receptacle. When the slide is latched at the end of the sliding motion, the simple movement of the sphere-like head in the direction of the dome shaped receptacle not only provided the actual connection between the two parts but also the automatic latching of the connection, which is therefore capable to resist mechanical loading exceeding many times over the force required for assembly.

Such connecting elements are disclosed for example in the DE 198 24 530 A1, in the DE 44 28 496 A1 or in the DE 298 04 345 U1 which is considered as closest prior art for the present invention.

In many cases, however, the connection also has to be easily releasable. In case of the mentioned examples from the automotive field it is for example during repairs necessary to replace the Bowden cables and to separate them from the shift lever or braking lever. The connections used in the prior art are either (without destruction) not releasable at all or they require complicated special tools in order to release the slide or the like from its latched position so that the dome shaped receptacle can be moved back into its starting position and the sphere-like head can be removed therefrom.

A further disadvantage of connections of the described type is the fact that the stable connection between the sphere-like head and the dome shaped receptacle is directly transmitting vibrations from one part to the other part. This is in many cases a disadvantage, in particular for the above mentioned connection between a shift lever and a Bowden cable, since the vibrations transmitted from the motor on the cable can thus be felt in the shift lever which renders precise shifting movements more difficult.

It is therefore the problem of the present invention to provide a simple and inexpensive connection between two parts which provides on the one hand a high mechanical stability with an easy assembly but which can also easily manually be released:

According to a further aspect of the present invention, the connection is to damp the transmission of vibrations between the two parts.

### 3. Summary of the Invention:

The invention relates to a connecting element for the releasable connection of a first part to a second part, in particular a cable to a lever, wherein the connecting element comprises a housing rigidly attached to the first part, an engaging element attached to the second part and a slide with a receiving element complementary shaped to the engaging element for the releasable connection of the engaging element with the receiving element, wherein the slide can slide inside the housing from a first position into a second position for latching the releasable connection between the engaging element and the receiving element. The connecting element further comprises at least one latching means for fixing the slide in the second position and at least one releasing means which serves for manually acting onto the at least one latching means to release the slide from the second position for unlatching the releasable connection between the engaging element and the receiving element.

Additionally, the connecting element comprises two snapping hooks as latching means, wherein two extensions of the snapping hooks are provided as release means and wherein the two extensions extend over the edge of the housing.

By the at least one releasing means, which is integrally connected with the connecting element, the slide can with a simple movement of the hand be released from its latched position, in order to separate the two parts from each other. Special tools or special technical skills are not necessary. Thus, it is for example in case of the use in the automotive field also for a non-skilled person possible to perform repairs which need a disassembly of the connected parts. However, the high mechanical stability of the connection remains unaffected.

By the releasing means provided as extensions of the two snapping hooks extending over the edge of the housing the slide can be released from its latched position simply by manually pressing the extensions together. Since the force for pressing attacks at the end of the extensions, an easy release is due to the lever principle also possible in case of a stable latching.

According to a particularly preferred embodiment, the slide slides along a bushing extending through the housing. This bushing allows by a suitable material selection an optimization of the sliding properties of the slide and facilitates thus the assembly of the two parts. Preferably, the bushing is apart from one or more slits for the release means closed by a cover on the side opposite to the engaging element.

A damping element for damping the transmission of vibrations between the two parts is preferably provided inside the housing. Preferably, the damping element is arranged between the bushing and the housing. Thus, the vibrational damping does not affect the stability of the connection between the engaging element and the slide. Preferably, the bushing has lateral projections or edges coacting with recesses of the damping element for its fixing.

Further advantageous developments of the present invention are the subject matter of the depending claims.

### 4. Short description of the drawing:

In the following detailed description presently preferred embodiments of the present invention are described with reference to the figures, which show:
- Figure 1:: A cross-section through a first preferred embodiment of the connecting element according to the invention immediately before the two parts are assembled;
- Figure 2:: the same cross-section as in Figure 1 through the first preferred embodiment in the latched state;
- Figure 3:: a top view of the preferred embodiment of the Figures 1 and 2;
- Figure 4:: a cross-section through a further preferred embodiment without vibrational damping.

### 5. Detailed description of the invention

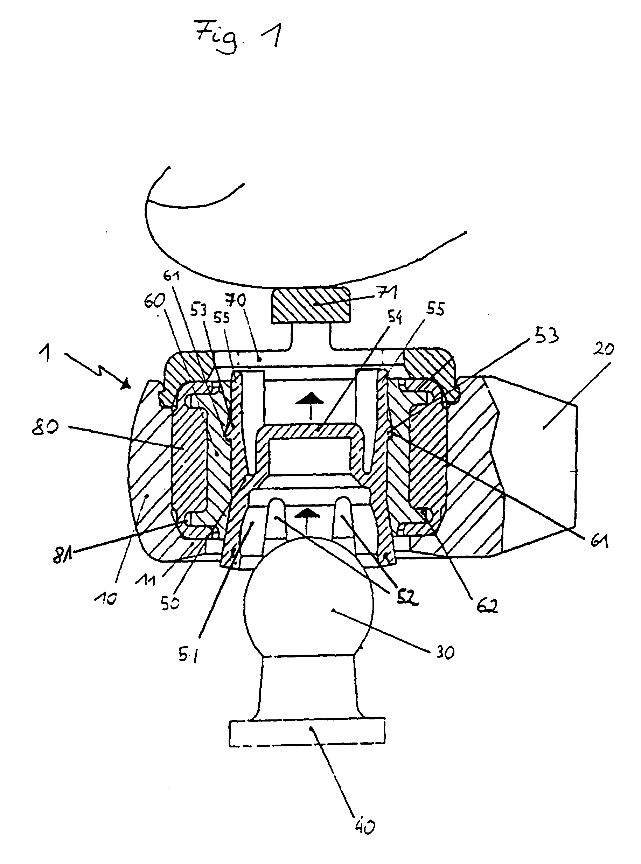

With reference to Figure 1 the connecting element 1 comprises a housing 10, which is mounted to a first part 20. For connecting, an engaging element 30, which is mounted to a second part 40, is inserted into the housing 10 (see the lower vertical arrow in Figure 1). The two parts 20 and 40, of which in Figure 1 only the corresponding ends to be connected are schematically shown, can be any arbitrary mechanical elements, for example a bar or the end of a Bowden cable etc. In the preferred embodiment of the connecting element 1, shown in Figure 1, an essentially rectangular connection is produced. With a correspondingly modified housing 10 also a straight interconnection is possible, as well as any other angle. This is without any importance for the mechanism of the connecting element 1 according to the invention described in the following.

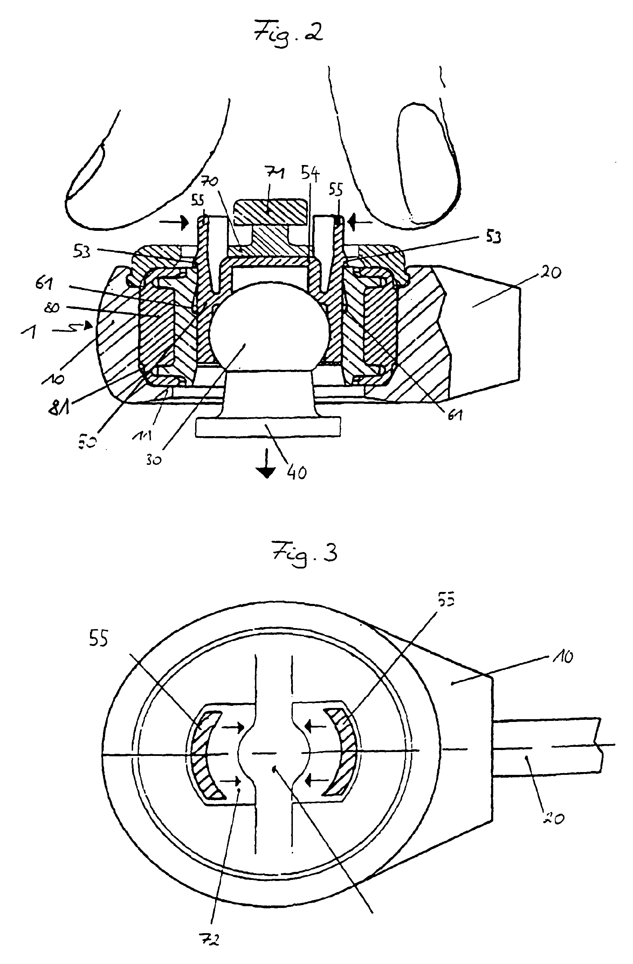

The preferably sphere or egg shaped engaging element 30 snaps under a movement in the direction of the arrow (cf. Figure 1) into the preferably dome shaped receiving element 51, arranged at the lower end of a slide 50. The sides of the receiving element 51 are preferably provided with openings 52 which allow a lateral bending of the receiving element 51 to facilitate the connecting and releasing of the engaging element 30 with or from the receiving element 51. The slide 50 is preferably slideably arranged within a bushing 60 and preferably preliminary fixed by lateral snapping hooks 53 which engage corresponding recesses 61 of the bushing 60. Under a further movement of the engaging element in the direction of the arrow, the complete slide 50 slides from its starting position upwards inside the bushing 60 (cf. upper vertical arrow in Figure 1), until an intermediate support 54 of the slide 50 contacts the lower side of a cover 70 (cf. Figure 2) which closes the housing on its upper side. Also other limitations for the sliding movement are possible, for example a stopper inside the bushing 60.

The preferred cover 70 protects the connecting mechanism against the accumulation of dirt and against damages. Furthermore, a holding and/or support surface 71 is provided on the upper side of the cover 70 for supporting the complete connecting element 1 when the engaging element 30 is being inserted (cf. the indicated finger in Figure 1). In the preferred embodiment shown in Figures 1 to 3, the cover 70 is clipped onto the housing 10. Other ways of mounting are also possible.

In the above position the snapping hooks 53 engage preferably the edge of the bushing 60 (cf. Figure 2) and thus fix the slide 50 against an axial movement in the direction of the downwards pointing arrow in Figure 2. Conceivable is also an embodiment, where the snapping hooks 53 engage additional upper recesses (not shown) of a correspondingly elongated bushing 60.

When the slide 50 slides upwards, the sides of the receiving element 51 are automatically compressed by the bushing 60 so that the sphere-like or egg-like engaging element 30 is rigidly fixed within the receiving element 51. As a result, the upward movement of the connector 51 provides a connection between the first part 20 and the second part 40 which is capable to resist high mechanical loading.

As can be seen from Figure 2, two releasing means 55 are provided for releasing the connection of the two parts 20, 40 which are provided as extensions of the two snapping hooks 53. When the slide is in the upper latched position, these two extensions 55 extend preferably through an opening 72 (cf. Figure 3) in the cover 70 over the edge of the housing 10. Thus, it is by means of a simple pressing of the two extensions 55 (cf. horizontal arrows in Figures 2 and 3) possible to release the slide 50 from its latched position, so that it can slide downwards with a downwardly directed pulling on the first part 20 (cf. vertical arrow in Figure 2) and the dome shaped receiving element 51 can release the engaging element 30. The connecting element 1 is then once again in the starting position shown in Figure 1.

In order to allow an easy manual release of the slide 50 from its latched position even with very stiff snapping hooks 53, the releasing means 55 might be longer than shown in Figures 1 and 2. The stiffness of the snapping hooks 53, which is essential for the maximum mechanical loading, of the connection is determined by the flexibility and material thickness of the sidewalls of the slide 50.

In the embodiment shown in Figures 1 to 3 of the connecting element 1 according to the invention, vibrations are damped additionally to the already described functions. To this end, a flexible damping element 80 is preferably arranged between the bushing 60 in which the slide 50 slides and the housing 10. Vibrations of the housing 10 are therefore only to a limited extent transmitted to the bushing 60 and thus to the engaging element 30 on which the second part 40 is attached.

Preferably, the damping element 80 is arranged between a lower projecting edge 11 of the housing 10 and the already above mentioned cover 70 at the upper edge of the housing 10. Thus, a direct mechanical contact between the housing 10 and the bushing 60 is effectively avoided. For a fixing of the bushing 60 relative to the damping element 80 it comprises on the upper and the lower side lateral projections or edges 62 engaging corresponding recesses 81 of the damping element 80.

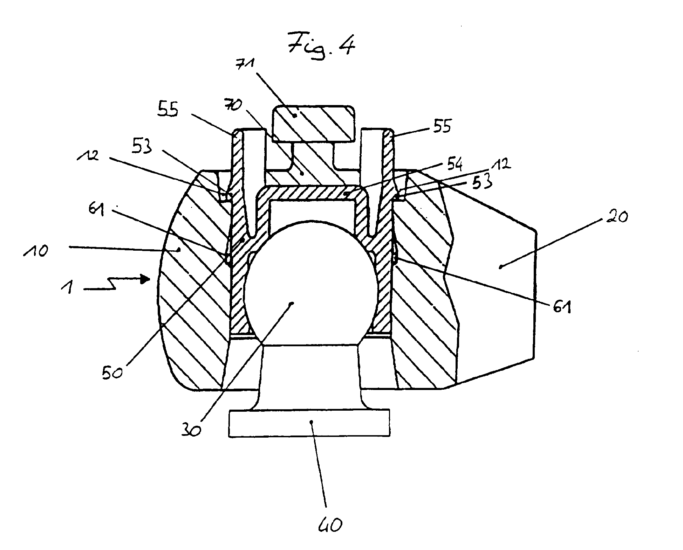

Figure 4 shows a simplified embodiment of the present invention without a vibrational damping. In this case the slide 50 slides directly along an opening inside the housing 10. The recesses 61 for the preliminary fixing of the slide 50 in the first position are as well as additional recesses 12 for the upper position directly provided in the housing 10. Further, the cover 70 is in this embodiment preferably an integral part of the housing 10 (cf. the hatching in Figure 4).

The described connecting element is preferably made of plastic materials or metals. Metals have a greater stability, whereas plastic materials, as for example Polyamide, are less expensive to produce, for example with injection molding. For the damping element 80 preferably typical Elastomers are used. For the selection of the materials for the slide 50 and the bushing 60 or the housing 10, respectively, it should be taken care that good sliding properties are achieved in order to provide an easy connecting of the two parts.

## Claims

1. Connecting element (1) for the releasable connection of a first part (20) with a second part (40), in particular a Bowden cable with a lever, comprising:
a) a housing (10) which is rigidly attached to the first part (20);
b) an engaging element (30) attached to the second part (40);
c) a slide (50) with a receiving element (51) complementary shaped to the engaging element (30) for the releasable connection of the engaging element (30) with the receiving element (51), wherein the slide (50) can slide inside the housing (10) from a first position into a second position for latching the releasable connection between the engaging element (30) and the receiving element (51);
d) at least one latching means (53) for fixing the slide (50) in the second position;
e) at least one releasing means (55) for manually acting onto the at least one latching means (53) to release the slide (50) from the second position for unlatching the releasable connection between the engaging element (30) and the receiving element (51); and wherein
f) two snapping hooks (53) are provided as latching means (53), **characterized in that**
g) two extensions (55) of the two snapping hooks (53) are provided as releasing means (55), wherein the two extensions (55) extend over the edge of the housing (10).

2. Connecting element according to claim 1, wherein the slide (50) slides along a bushing (60) extending through the housing (10).

3. Connecting element according to one of the claims 1 or 2, wherein additional recesses (61) for the snapping hooks (53) are provided inside the bushing (60) to preliminary fix the slide (50) for facilitating the connecting of the engaging element (30) with the receiving element (51) in the first position.

4. Connecting element according to claims 2 or 3, wherein the bushing (60) is apart from one or more slits (72) for the extensions (55) covered by a cover (70) on the side opposite to the engaging element (30).

5. Connecting element according to claim 4, wherein on the outer side of the cover (70) a holding and/or support surface (71) is arranged for facilitating the connecting of the two parts (20, 40).

6. Connecting element according to one of the preceding claims, wherein a damping element (80) for damping the transmission of vibrations between the two parts (20, 40) is provided inside the housing (10).

7. Connecting element according to claim 6, wherein the damping element (80) is arranged between the bushing (60) and the housing (10).

8. Connecting element according to claim 7, wherein the bushing comprises lateral projections or edges (62) co-acting for its fixing with recesses (81) of the damping element (80).

## Patentansprüche

1. Verbindungselement (1) für eine lösbare Verbindung eines ersten Teils (20) mit einem zweiten Teil (40), insbesondere mit einem Bowdenzug mit einem Hebel, umfassend:
a) ein Gehäuse (10), welches fest mit dem ersten Teil (20) verbunden ist;
b) ein Eingriffselement (30), verbunden mit dem zweiten Teil (40);
c) ein Schiebeelement (50) mit einem Empfangselement (51), welches zum Eingriffselement (30) komplementär geformt ist für eine lösbare Verbindung des Eingriffselements (30) mit dem Empfangselement (51), wobei das Schiebeelement (50) in dem Gehäuse (10) von einer ersten Position in eine zweite Position verschiebbar ist, um die lösbare Verbindung zwischen dem Eingriffselement (30) und dem Empfangselement (51) zu arretieren;
d) mindestens ein Verriegelungsmittel (53), um das Schiebeelement (50) in der zweiten Position zu arretieren;
e) mindestens ein Lösemittel (55), um manuell auf das mindestens eine Verriegelungsmittel (53) einwirken zu können, um das Schiebeelement (50) aus der zweiten Position zu lösen, um die lösbare Verbindung zwischen dem Eingriffselement (30) und dem Empfangselement (51) zu entriegeln; und wobei
f) zwei Schnapphaken (53) als Verriegelungsmittel (53) bereitgestellt werden, **dadurch gekennzeichnet dass**
g) zwei Verlängerungen (55) der zwei Schnapphaken (53) als Lösemittel (55) bereitgestellt werden, wobei die zwei Verlängerungen (55) sich über die Kante des Gehäuses (10) erstrecken.

2. Verbindungselement gemäß Anspruch 1, wobei das Schiebeelement (50) entlang einer sich durch das Gehäuse (10) erstreckenden Hülse (60) gleiten kann.

3. Verbindungselement gemäß einem der Ansprüche 1 oder 2, wobei innerhalb der Hülse (60) zusätzliche Rücksprünge (61) für die Schnapphaken (53) bereitgestellt werden, um das Schiebeelement (50) vorläufig zu fixieren, um die Verbindung des Eingriffselements (30) mit dem Empfangselement (51) in der ersten Position zu erleichtern.

4. Verbindungselement gemäß der Ansprüche 2 oder 3, wobei die Hülse (60), abgesehen von einem oder mehreren Schlitzen (72) für die Verlängerungen (55), von einer Abdeckung (70), die sich gegenüberliegend des Eingriffselements (30) befindet, bedeckt ist.

5. Verbindungselement gemäß Anspruch 4, wobei auf der Außenseite der Abdeckung (70) eine Halte- und/oder Stützoberfläche (71) angeordnet ist, um die Verbindung der zwei Teile (20, 40) herzustellen.

6. Verbindungselement gemäß einem der vorgehenden Ansprüche, wobei innerhalb des Gehäuses (10) ein Dämpfungselement (80) bereitgestellt ist, um die Übertragung von Vibrationen zwischen den zwei Teilen (20, 40) zu dämpfen.

7. Verbindungselement gemäß Anspruch 6, wobei das Dämpfungselement (80) zwischen der Hülse (60) und dem Gehäuse (10) angeordnet ist.

8. Verbindungselement gemäß Anspruch 7, wobei die Hülse seitliche Vorsprünge oder Kanten (62) umfasst, welche zusammen wirken, um die Hülse mit Aussparungen (81) des Dämpfungselements (80) zu fixieren.

## Revendications

1. Élément de liaison (1) pour la liaison libérable d'une première pièce (20) avec une seconde pièce (40), en particulier d'un câble Bowden avec un levier, comprenant :
a) un boîtier (10) qui est rigidement solidarisé à la première pièce (20) ;
b) un élément de contact (30) solidarisé à la seconde pièce (40) ;
c) un coulisseau (50) avec un élément récepteur (51) de forme complémentaire de l'élément de contact (30) pour la liaison libérable de l'élément de contact (30) avec l'élément récepteur (51), le coulisseau (50) pouvant coulisser à l'intérieur du boîtier (10) depuis une première position jusqu'à une seconde position pour verrouiller la liaison libérable entre l'élément de contact (30) et l'élément récepteur (51) ;
d) au moins un moyen de verrouillage (53) pour immobiliser le coulisseau (50) dans la seconde position ;
e) au moins un moyen libérable (55) pour agir manuellement sur le au moins un moyen de verrouillage (53) pour libérer le coulisseau (50) à partir de la seconde position pour déverrouiller la liaison libérable entre l'élément de contact (30) et l'élément récepteur (51) ; et dans lequel
f) deux ergots d'encliquetage (53) sont prévus en tant que moyen de verrouillage (53), **caractérisé en ce que**
g) deux prolongements (55) des ergots d'encliquetage (53) sont prévus en tant que moyen libérable (55), les deux prolongements (55) s'étendant au-dessus du bord du boîtier (10).

2. Élément de liaison selon la revendication 1, dans lequel le coulisseau (50) coulisse le long d'une douille (60) s'étendant au travers du boîtier (10).

3. Élément de liaison selon l'une des revendications 1 ou 2, dans lequel des évidements additionnels (61) pour les ergots d'encliquetage (53) sont prévus à l'intérieur de la douille (60) pour fixer au préalable le coulisseau (50) pour faciliter la liaison de l'élément de contact (30) avec l'élément récepteur (51) dans la première position.

4. Élément de liaison selon les revendications 2 ou 3, dans lequel la douille (60) est à l'exception d'une ou plusieurs fentes (72) pour les prolongements (55) recouverte par un couvercle (70) sur le côté opposé à l'élément de contact (30).

5. Élément de liaison selon la revendication 4, dans lequel une surface de maintien et/ou de support (71) est disposée sur le côté extérieur du couvercle 70 pour faciliter la liaison des deux pièces (20, 40).

6. Élément de liaison selon l'une des revendications précédentes, dans lequel un élément d'amortissement (80) pour amortir la transmission des vibrations entre les deux pièces (20, 40) est prévu à l'intérieur du boîtier (10).

7. Élément de liaison selon la revendication 6, dans lequel l'élément d'amortissement (80) est disposé entre le douille (60) et le boîtier (10).

8. Élément de liaison selon la revendication 7, dans lequel la douille comprend des saillies latérales ou des bords (62) coopérant pour la solidarisation avec des évidements (81) de l'élément d'amortissement (80).
